Europäisches Patentamt

European Patent Office

Office européen des brevets

(11) Publication number: **0 225 402**
**A1**

# EUROPEAN PATENT APPLICATION

(21) Application number: 85308039.8

(51) Int. Cl.⁴: **B01J 35/04**

(22) Date of filing: 05.11.85

(43) Date of publication of application:
16.06.87 Bulletin 87/25

(84) Designated Contracting States:
DE FR GB

(71) Applicant: **NIPPONDENSO CO., LTD.**
**1, 1-chome, Showa-cho**
**Kariya-shi Aichi-ken(JP)**

(72) Inventor: **Okamoto, Yasuhide**
**1-15-41, 2-chome, Meijou Kita-ku**
**Nagoya-shi Aichi-ken(JP)**
Inventor: **Yoshida, Hitoshi**
**16-4, Aza Shimizuda Kake-machi**
**Okazaki-shi Aichi-ken(JP)**
Inventor: **Miura, Yasunao**
**96, Hachiman-cho**
**Kasugai-shi Aichi-ken(JP)**
Inventor: **Takeuchi, Yukihisa**
**42, Aza Gomuro Oaza Kusagi Agui-cho**
**Chita-gun Aichi-ken(JP)**
Inventor: **Watabe, Hiroshi**
**58, Minamino Ichido-cho**
**Toyokawa-shi Aichi-ken(JP)**
Inventor: **Ito, Kazuyuki**
**4-24, Sakura-machi**
**Nishio-shi Aichi-ken(JP)**
Inventor: **Fukutani, Masanori**
**1-77, Momoyama Midori-ku**
**Nagoya-shi Aichi-ken(JP)**

(74) Representative: **Hartley, David et al**
**c/o Withers & Rogers 4 Dyer's Buildings**
**Holborn**
**London, EC1N 2JT(GB)**

(54) Porous ceramic structure.

(57) A honeycomb type porous ceramic structure is used for collecting fine particles discharged from an internal combustion engine. The porous ceramic structure has axially foremd inlet holes and axially formed outlet holes arranged such that adjacent inlet and outlet holes are separated by partition walls. The cross-section of each inlet hole reduces gradually toward the closed end thereof, and the cross-section of each outlet hole increases gradually toward the open end thereof. Alternatively, or in addition, the partition walls increase in thickness gradually from inlet-side end portions toward outlet-side end portions thereof.

## POROUS CERAMIC STRUCTURE

This invention relates to a porour ceramic structure, more particularly to a porous ceramic structure such as used for collecting fine particles suspended in the exhaust gas of an internal combustion engine.

The porous ceramic structure of the present invention may also be used as a holder of a catalyst which promotes oxidation and reduction of NDx, CO and HC in the exhaust gas.

Conventional structures of this kind are described in U.S. Patent Nos. 4,329,162 and 4,264,346.

It is known that porous ceramic structures having a three-dimensional network structure and having a honeycomb structure are suitable for collecting fine particles discharged from a diesel engine. A porous ceramic honeycomb structure produced by forming a number of non-through holes from both end faces of a ceramic structure so as not to interfere with each other is one of porour ceramic structures having a small gas flow resistance and a high fine particles collecting efficiency.

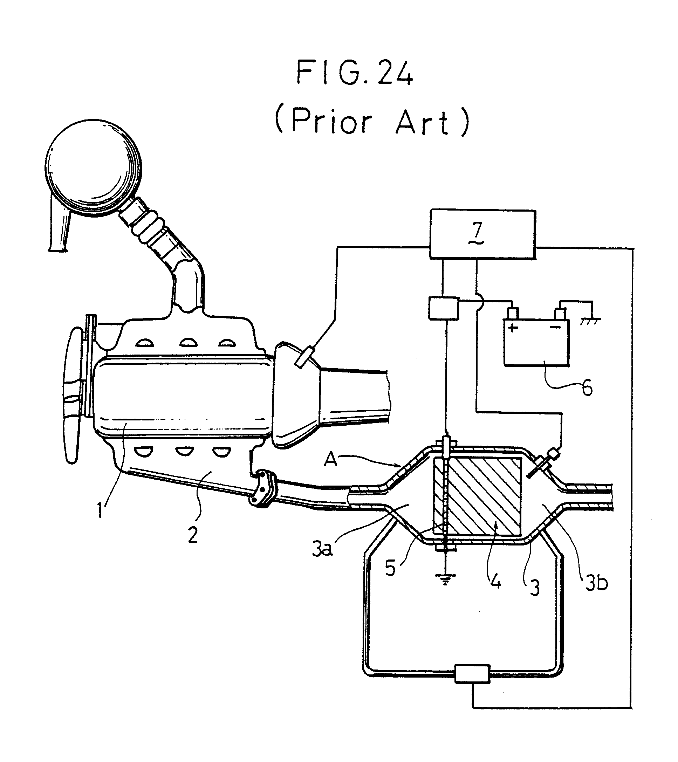

A typical fine particle collector for an internal combustion engine is constructed as shown in Figure 24. More particularly, as shown in the same Figure, a fine particle collector A is connected to an exhaust manifold 2 of a diesel engine 1 and comprises a metallic vessel 3 which has an exhaust gas inlet port 3a communicating with the exhaust manifold 2 and an exhaust gas output port 3b. Within the metallic vessel 3 are mounted a filter member 4 for collection of fine particles and an electric heater 5 connected to an end face on an exhaust gas inlet side of the filter member 4. The electric heater 5 is for burning the fine particles collected by the filter member 4 to regenerate the latter. The supply of electrical power by a battery 6 is controlled by a control circuit 7, in accordance with input signals from various sensors which detect a pressure loss of the filter member 4, fuel consumption, running distance etc.

The exhaust gas from the engine 1 flows into the vessel 3 of the collector A through the inlet port 3a, then passes through the filter member 4 and flows out from the outlet port 3b. While the exhaust gas passes through the filter member 4, fine particles of carbon in the exhaust gas are collected and removed by the filter member 4.

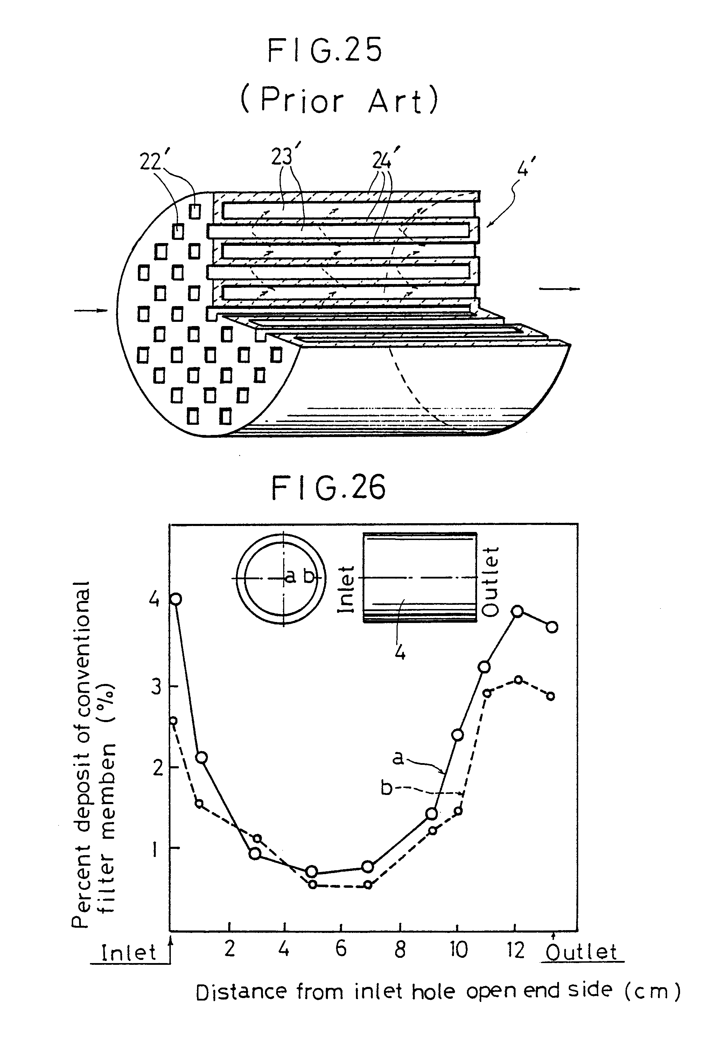

The construction of the filter member 4 is, for example, as shown in Figure 25. More specifically, it has a number of holes 22' and 23' separated by partition walls 24' which are formed of a porous ceramic material having a three-dimensional network structure. As an external structure, the filter member 4 has a cylindrical honeycomb structure. The size of the pores of the partition walls 24' is in the range of 100μm to 6.0 mm.

The filter member 4' allows fine particles of carbon in the exhaust gas supplied to an inlet passage to impinge upon the ceramic framework which constitutes the partition walls 24' as shown in Figure 25, thereby allowing the fine carbon particles to adhere and deposit onto the surface of the ceramic framework. Thus, basically, the collecting function is attained by such impingement collection mechanism. In this case, the fine carbon particles should adhere and deposit uniformly onto all the partition walls 24' in the filter member 4'. This is important for collecting the particles efficiently at a constant volume and if the increase of pressure is to be kept to a minimum.

In the above conventional so-called honeycomb foam type ceramic structure, the holes 22' and 23' having a constant cross-sectional area and the partition walls 24' also having a constant cross-sectional area are arranged in parallel with each other as shown in Figure 25. One disadvantage of the illustrated arrangement is that a large proportion of fine particles are apt to be collected at and near the inlets and the outlets of the holes as shown in Figure 26, i.e. the collection of particles is non-uniform, and so the collection efficiency is poor. The percent adhesion referred to in Figure 26 means the quantity of fine particles collected in 100 grams of the ceramic structure.

This invention aims to overcome the above-mentioned drawback, and to provide a ceramic structure capable of collecting uniformly fine particles contained in exhaust gas or the like and hence having a high collection efficiency and no local clogging.

Another object of the invention is to use a so-called honeycomb foam type ceramic structure, used for collecting fine particles, as the holder of the catalyst. A further object is to increase the conversion of the catalyst when the ceramic structure of the present invention is used as the holder thereof.

According to the present invention we propose a porous ceramic structure formed with inlet holes and outlet holes such that the pores in partition walls afford fluid communication between adjacent inlet and outlet holes along the length thereof wherein the cross-sectional area of the inlet holes and/or the outlet holes and/or the thickness of the partition walls increases in the downstream direction of fluid flow from inlet to outlet. More particularly, the ceramic structure has a group of axially arranged inlet holes and a group of axially arranged outlet holes. Preferably, the inlet holes and outlet holes are interspersed or otherwise arranged such that adjacent inlet and outlet holes are separated by partition walls. As in conventional structures, the inlet holes may extend into the structure from one axial face or end thereof and the outlet holes from the other, so facilitating connection of the group of inlet holes and the group of outlet holes respectively with the inlet and exhaust or outlet flows.

In one embodiment, wherein the inlet holes have open front ends and closed rear ends, and the outlet holes have closed front ends and open rear ends, each inlet hole reduces in cross-sectional area gradually toward the closed end thereof, and each outlet hole increases in cross-sectional area gradually toward the open end thereof.

In another embodiment, the partition walls are gradually increased in sectional area from inlet-side end portions toward outlet-side end portions thereof.

In addition, each inlet hole may be reduced in cross-section gradually toward the closed end thereof, and/or each outlet hole may be increased in cross-section gradually toward the open end thereof.

Other features of the present invention are set forth in the appended claims. Also further objects, advantages and features of the invention will become apparent to those skilled in the art from the following description by way of example, of embodiments of the invention. Reference is made to the accompanying drawings, in which:

Figure 1 is a longitudinal cross-section of a first embodiment of filter member according to this invention;

Figure 2 is a left side view of the filter member of Figure 1;

Figure 3 is a longitudinal cross-section of a second embodiment of filter member;

Figure 4 is a left side view of the filter member of Figure 3;

Figure 5 is a longitudinal cross-section of a third embodiment of filter member;

Figure 6 is a left side view of the filter member shown in Figure 5;

Figure 7 is a right side view of the filter member of Figure 5;

Figure 8 is a longitudinal cross-section of a fourth embodiment of filter member;

Figure 9 is a left side view of the filter member shown in Figure 8;

Figure 10 is a right side view of the filter member shown in Figure 8;

Figure 11 is a longitudinal cross-section of a fifth embodiment of filter member;

Figure 12 is a left side view of the filter member shown in Figure 11;

Figure 13 is a graph showing measurement results of distribution of carbon deposit in the fifth embodiment;

Figure 14 is a longitudinal cross-section of a filter member according to this invention;

Figure 15 is a partially cut-away perspective view of a sixth embodiment of filter member according to this invention;

Figure 16 is a longitudinal cross-section of the filter member shown in Figure 15;

Figure 17 is an enlarged sectional view of detail V in Figure 16;

Figure 18 is a graph showing a carbon deposit quantity of a filter member according to a sixth embodiment;

Figure 19 is a plan view of a mold vessel portion used in producing the first embodiment of filter member;

Figure 20 is a cross-section on X-X in Figure 19;

Figure 21 is a plan view of a mold cover portion for the mold vessel of Figure 19;

Figure 22 is a cross-section on Y-Y in Figure 21;

Figure 23 is a longitudinal cross-section showing the assembled mold vessle of Figure 19 and the mold cover of Figure 21;

Figure 24 is a general view of a conventional arrangement including a filter member, for fine particle collection;

Figure 25 is a perspective view of the filter member shown in Figure 24; and

Figure 26 is a graph showing a percent deposite of the conventional filter member;

Figure 27 is a graph showing a comparison of the conversion percentage of catalysts held by the porous ceramic structure shown in Figure 15 and that shown in Figure 25.

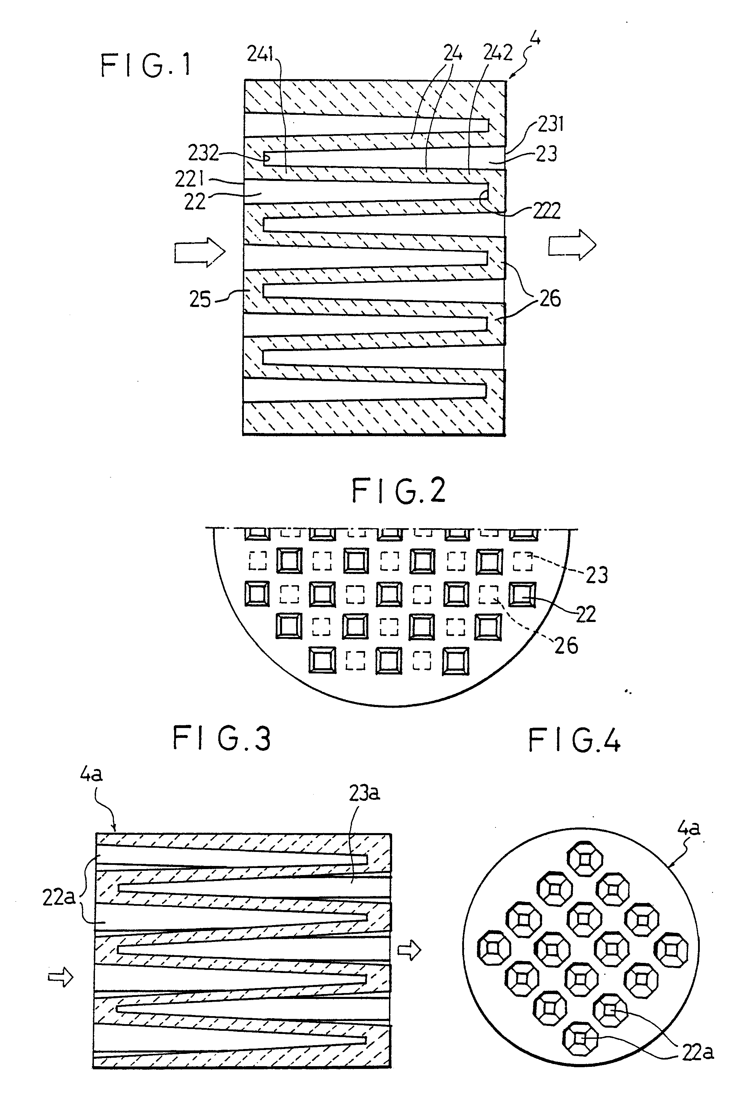

The ceramic structure of this invention has a group of axially formed inlet holes and a group of axially formed outlet holes adjacent to said group of inlet holes through partition walls, the inlet holes having open front ends and closed rear ends, the outlet holes having closed front ends and open rear ends. As shown for example in Figure 1, the inlet holes 22 each reduce in cross-section gradually from an open end 221 thereof toward a closed end 222, while the outlet holes 23 each increase in cross-section gradually from a closed end 232 thereof toward an open end 231.

This is for the following purpose. As the gaseous fluid introduced at the open end 221 of each inlet hole 22 flows toward the closed end 222 of the inlet hole, its volume is reduced since gas passes through the partition walls 24 into the adjacent outlet holes 23. The cross-sectional flow area of the inlet hole is reduced gradually in proportion to such decrease of the gas quantity, in order to achieve uniformity of the gas flow through the partition walls 24 along the length thereof, while maintaining the flow rate as constant as possible. Further, such gradual decrease in sectional area of the inlet hole 22 permits an easy impingement of gas upon the inclined partition walls 24.

The angle at which the inlet and the outlet holes taper should be more than 0.5° in order to obtain the desired gradual decrease and increase in cross-sectional or flow area of the inlet and outlet hole respectively.

Preferably, the angle is 2° or more to ensure sufficient increase or decrease in the cross-sectional area of the holes.

The thickness of each partition wall between the inlet and outlet holes can be made constant, whereby the gas flow resistance from the inlet hole open end to the outlet hole open end can be rendered uniform. As a result, fine particles are collected uniformly throughout the full length of each inlet hole, thus improving the collection efficiency.

The sectional shape of the inlet and outlet holes (the sectional shape of the hole portion defined by open and closed ends and partition walls) can be made, for example, circular or square. It may be selected suitably, for example, it may be rectangular, star or rhombic. Even if the sectional shape of each open end is, for example, circular or square, it is not always necessary to be so continuously from each inlet end to each closed end. For example, each open end may be hexagonal or octagonal, and an intermediate portion thereof may be triangular or square. The inlet hole open end and the outlet hole open end may be different in sectional shape.

A porous ceramic structure according to this invention has a group of axially formed inlet holes and a group of axially formed outlet holes adjacent to said group of inlet holes through partition walls, the inlet holes having open front ends and closed rear ends, the outlet holes having closed front ends and open rear ends, the partition walls being gradually increased in sectional area from inlet-side end portions toward outlet-side end portions thereof.

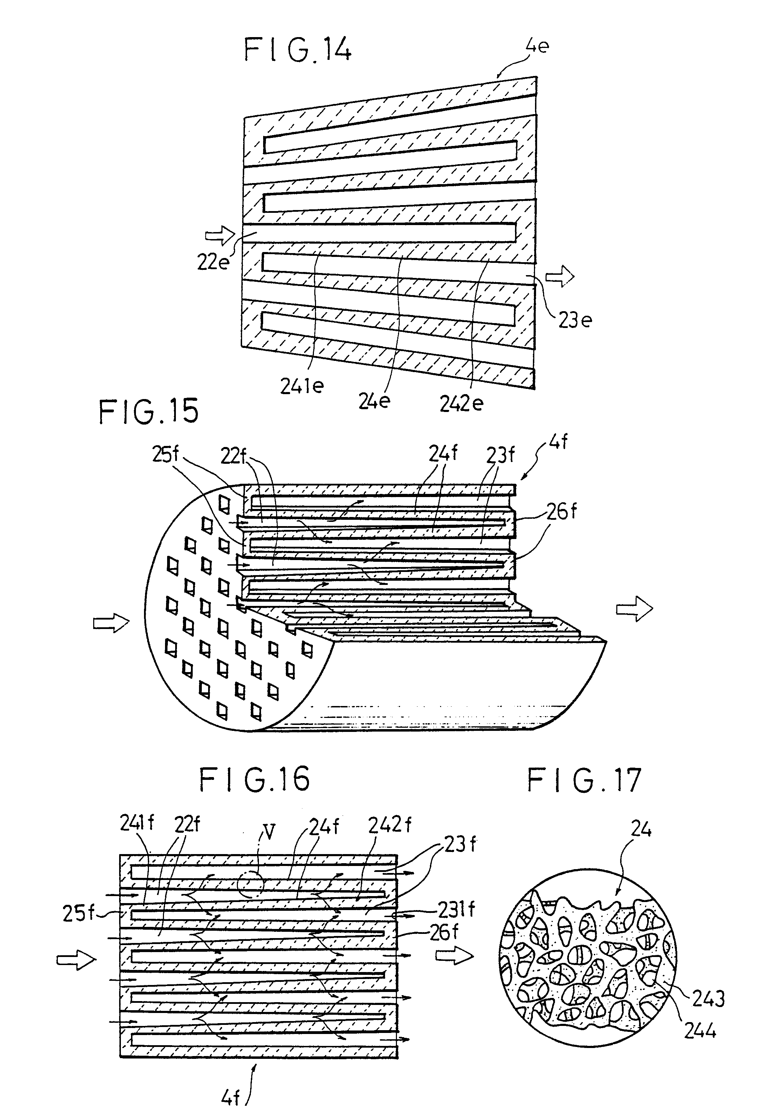

In the porous ceramic structure as shown in Fig.14, the sectional area of a partition wall 24e in a filter member is increased gradually from an inlet-side end portion 241e toward an outlet-side end portion 242e. In the inlet-side end portion 241e, since its sectional area is small, the exhaust gas passage in the three-dimensional network structure becomes short and the passage resistance is reduced, so the quantity of gas passing therethrough increases. On the other hand, in the outlet-side end portion 242e, since its sectional area is large, the exhaust gas passage becomes long and the passage resistance increases, thus reducing the quantity of gas passing therethrough. Consequently, the gas passes through the ceramic structure uniformly as a whole.

Further, as shown in Figs.15 and 16, the porous ceramic structure of this invention may be of a structure in which partition walls 24f are gradually increased in sectional area from inlet-side end portions 241f toward outlet-side end portions 242f, and the sectional area of each inlet hole decreases gradually toward a closed end thereof, while the sectional area of each outlet hole increases gradually toward an open end thereof.

Also in the porous ceramic structure of this invention, the inlet and outlet holes may take various sectional shapes as previously noted.

According to this invention, it is preferable that the filter member be formed of cordierite. But, the material of the filter member is not limited thereto. For example, various ceramic materials may be used, including silicon carbide (SiC), silicon nitride ($Si_3N_4$), aluminium oxide ($Al_2O_3$) and $\beta$-spondumene or the like.

The method of producing the filter member 4 will be described below.

(First Manufacturing Method)

In general, a ceramic filter of a honeycomb structure having partition walls of a three-dimensional network structure is obtained by using as a base material an organic compound such as polyurethane foam having a similar three-dimensional network structure, coating a ceramic material onto the whole inner surfaces of the base material, followed by calcining, thereby allowing the organic compound as the base material to burn and scatter and causing the surrounding ceramic material to be sintered into a similar structure to the base material. Therefore, by molding the organic compound as the base material into a desired structure, there can be obtained a ceramic filter of a desired structure.

(Second Manufacturing Method)

A bulky foam is obtained by foaming of urethane foam as a base material in a free space. From this foam is cut out a foam of a desired external shape by means of a linear heater or the like. Then, a sheath-like heater containing a heating element such as nichrome wire and having a columnar appearance and a sectional shape which becomes smaller gradually from a base end portion toward a front end portion, is inserted from each of both end faces of the foam toward the opposite end while heat-melting the urethane foam. By repeating this operation there is obtained a shaped urethane foam having the same shape as in the first manufacturing method. The operation which follows is the same as in the first manufacturing method.

(Third Manufacturing Method)

Urethane foam having a desired shape of external appearance is cut out from a bulky foam, and the laser light is directed to the interior from each end face of the urethane foam. By a thermal action of the laser light there is formed a passage which extends up to the opposite end. In this case, the partition located between the passages is tapered by utilizing the nature of the laser light that the light converges and it has a width in the vicinity of the converging point.

Then, part of each passage open at both ends is closed in the state of urethane or in the state after ceramic bonding, whereby there is obtained a filter of the same structure as in the first manufacturing method.

(Fourth Manufacturing Method)

Ceramic material is bonded to urethane foam which has been cut out from a bulky foam, followed by calcining, to obtain a bulky ceramic product. Then a drill coated with diamond powder and having a columnar appearance and a sectional area which becomes smaller from a base end portion toward a front end portion, is inserted to the interior from each end face of the bulky ceramic product, thereby forming a passage. By repeating this operation, there is obtained a filter of the same structure as in the first manufacturing method.

According to said manufacturing method, as to the molded urethane foam used as the base material in the manufacture of the filter, other materials may be used in place of urethane foam.

This invention has the features and advantages summarized below.

According to this invention, as set forth hereinabove, the inlet holes are reduced in sectional area gradually toward the closed ends thereof, while the outlet holes are increased in sectional area gradually toward the open ends thereof. Such a structure permits a uniform collection of fine carbon particles throughout the full length of the partition walls, and consequently the collection efficiency can be further improved.

According to this invention, the partition walls are increased in sectional area gradually from the inlet-side end portion thereof toward the outlet-side end portions thereof. Consequently, the quantity of gas passing through the partition walls of the ceramic filter becomes uniform as a whole, so that the quantity of the particulate carbon deposit is averaged and the fine carbon particles can be collected efficiency at a constant volume.

The advantage described above is also attained when the porous ceramic structure of the present invention is used as the holder of the catalyst. Since the exhaust gas flow flowing through the partition walls becomes uniform as a whole, the catalyst can converse efficiency.

In addition, according to this invention, since there is no local clogging, the increase of pressure loss of the exhaust gas or the like is kept to a minimum, thus ensuring a good engine performance.

## DETAILED DESCRIPTION OF THE EMBODIMENTS

Embodiments of this invention will be described in detail hereinunder to further illustrate the invention.

First Embodiment

Fig.1 illustrates a porous ceramic structure according to an embodiment of this invention, in which a filter member 4 is formed of a material such as cordierite. Fig.1 is a longitudinal sectional view thereof and Fig.2 illustrates a left half of a left side view thereof.

As shown in Fig.1, a group of inlet holes 22 each having an open end 221 on an inlet side and a group of outlet holes 23 each having an open end 231 on an outlet side are formed in a separated state through a partition wall 24. The outlet side of each inlet hole 22 and the inlet side of each outlet hole 23 are closed as closed ends 222 and 232, respectively.

The closed ends 222 and 232 are interconnected through the partition walls 24. The partition walls are inclined so as to create a gradual change in sectional area of the inlet and outlet holes 22 and 23. This inclination is formed so that the inlet holes are tapered in the flowing direction of exhaust gas and the outlet holes 23 tapered in the opposite direction. The partition walls 24 are uniform in thickness.

Since the filter member 4 per se is formed of a porous ceramic material, the exhaust gas entering each inlet hole 22 in the direction of arrow passes through the partition walls 24 of a fine three-dimensional network structure, reaching the adjacent outlet holes 23 and flowing out in the direction of arrow. While the exhaust gas passes through the partition walls 24, fine particles contained therein are collected. In this case, since the partition walls 24 are inclined as mentioned above, the gas impinge upon the entire wall surface and so the fine particles are easily collected as compared with straight partition walls. Further, the flowing velocity is maintained constant and the fine particles are collected uniformly throughout the partition walls because the inlet holes are gradually reduced in sectional area while the outlet holes gradually increase in sectional area.

A concrete manufacturing method for the porous ceramic filter will be described below.

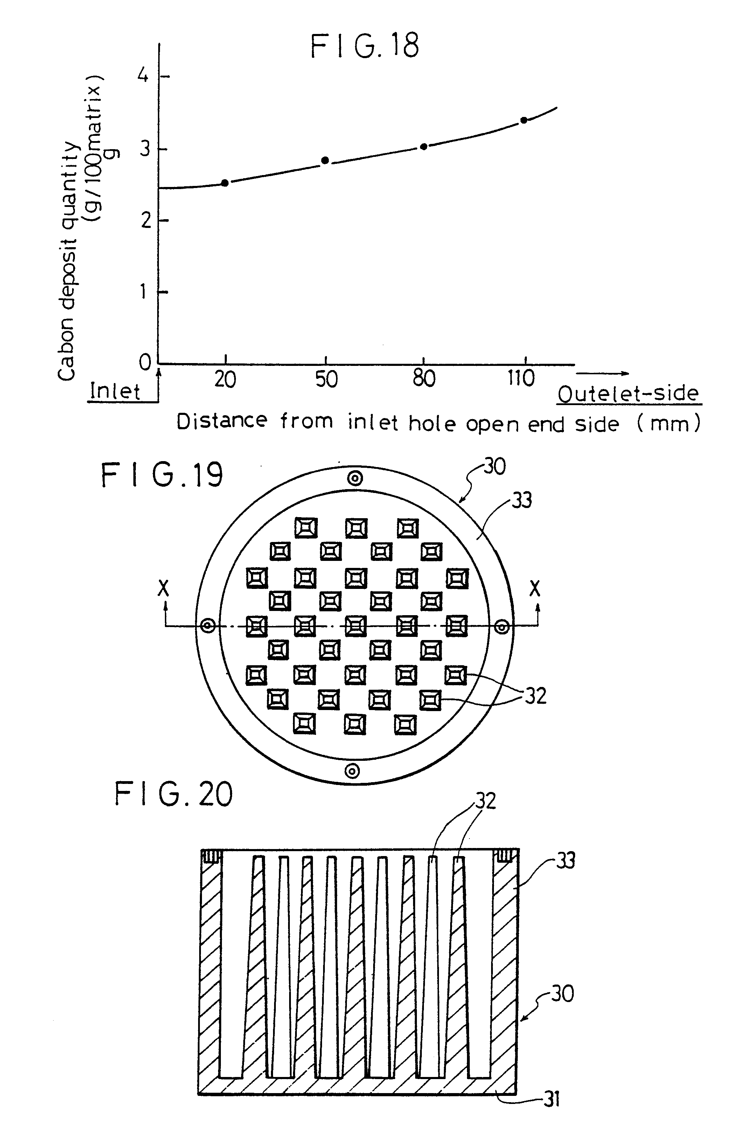

Figs.19 and 20 illustrate a mold vessel portion 30, of which Fig.19 is a plan view thereof and Fig.20 is a sectional view as seen in the arrowed direction of X-X in Fig.19. The mold vessel portion 30 comprises an end face 31, a plurality of pins 32 erected on the end face 31, and a cylindrical side wall 33 erected on the outer peripheral portion of the end face 31. The pins 32 are each square in sectional shape and in the form of a taper which decreases in sectional area gradually continuously in a direction away from the end face 31. The side opposite to the end face 31 is open.

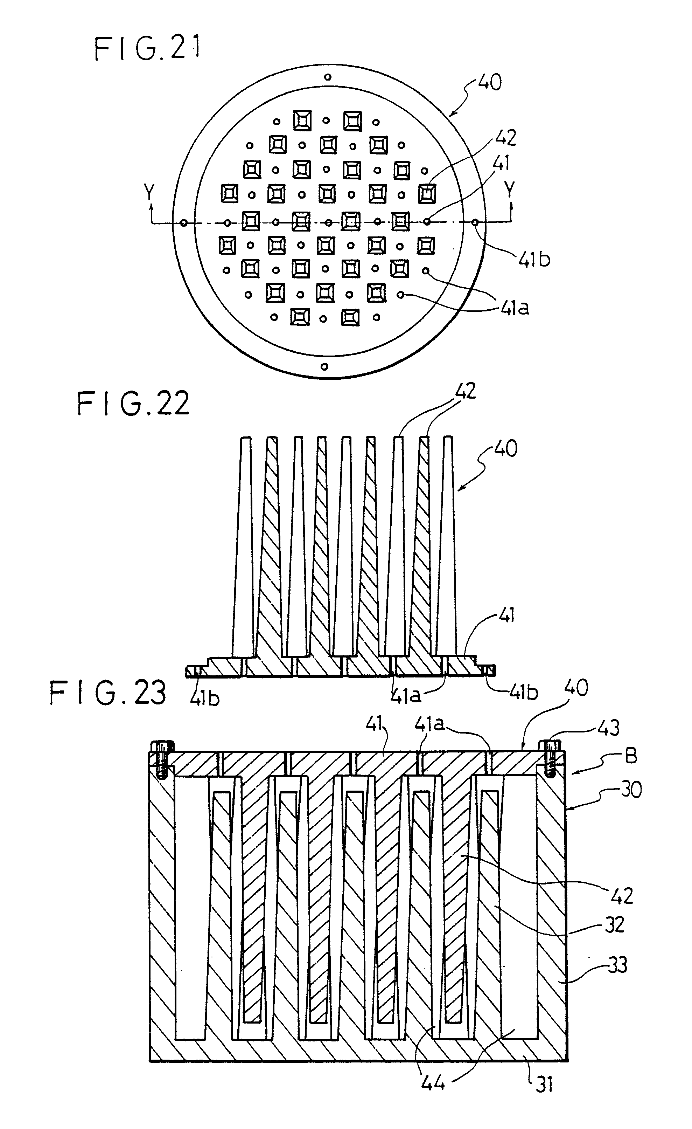

Figs.21 and 22 illustrate a mold cover portion 40 for covering the above mold vessel portion, of which Fig.21 is a plan view thereof and Fig.22 is a sectional view as seen in the arrowed direction of Y-Y in Fig.21. The mold cover portion 40 comprises an end face cover 41 and a plurality of pins 42 erected on the end face cover 41. In the end face cover 41 are formed through holes 41a in positions not interfering with the pins 42. The pins 42 are formed so as not to interfere with the pins of the mold vessel portion when the mold cover portion 40 is put on the mold vessel portion. Further, mounting holes 41b for fixing the cover 40 to the mold vessel portion are formed in quartered points on the outer periphery of the end face cover 41.

Fig.23 illustrates a mold B comprising the mold vessel portion 30 and the mold cover portion 40 fixed with machine screws 43 to the mold vessel portion 30. A cavity 44 is formed between the vessel portion 30 and the cover portion 40, and a mixed solution of urethane foam raw materials, for example, an intimately stirred mixture of 100 parts polyol and 25-43 parts, desirably 35-43 parts isocyanate, is poured into the cavity. The mixed solution foam within the cavity 44 and is then hardened by heating at 120°C for 20 to 60 minutes. After hardening, the vessel portion 30 and the cover portion 40 are separated to obtain a molded urethane foam of a honeycomb structure.

The molded urethane foam thus obtained has a thin membrane called cell membrane between three-dimensional network frames, and the molded urethane foam is immersed in a strong alkali solution, such as sodium hydroxide to deteriorate and remove the cell walls. Then, a powder consisting principally of cordierite, water and polyvinyl alcohol, for example, 100 parts of powder containing MgO, Al$_2$O$_3$ and SiO$_2$ as the cordierite composition, 60 -80 parts of water and 6 -10 parts of polyvinyl alcohol, are mixed and stirred. And the molded urethane foam is immersed in the resulting ceramic slurry to let the ceramic slurry adhere to the framework surface of the molded urethane foam. Then, after removing excess slurry by centrifugal separation or other suitable means, drying is made by heating at 100 -200 °C. The immersion and drying are repeated plural times.

Lastly, the molded urethane foam thus impregnated with the slurry is calcined at 1,300 -1,470 °C for 2 to 6 hours, whereby the organic compound as the urethane foam component is burnt and scattered and the ceramic slurry is baked up. As a result of scatter of the urethane foam framework, spaces 244 as shown in Fig.17 are formed in the ceramic body in the scattered positions.

By such method there is obtained a porous ceramic filter 4 having tapered inlet and outlet holes as shown in Fig.1 and having a honeycomb structure comprising a three-dimensional network structure as shown in Fig.17.

Second Embodiment

Figs.3 and 4 illustrate a second embodiment of the present invention, in which a filter member 4a has inlet and outlet holes 22a and 23a which are octagonal in section at open ends thereof.

The manufacturing method is just the same as in the first embodiment except that the shape of pins of the mold is different.

Third Embodiment

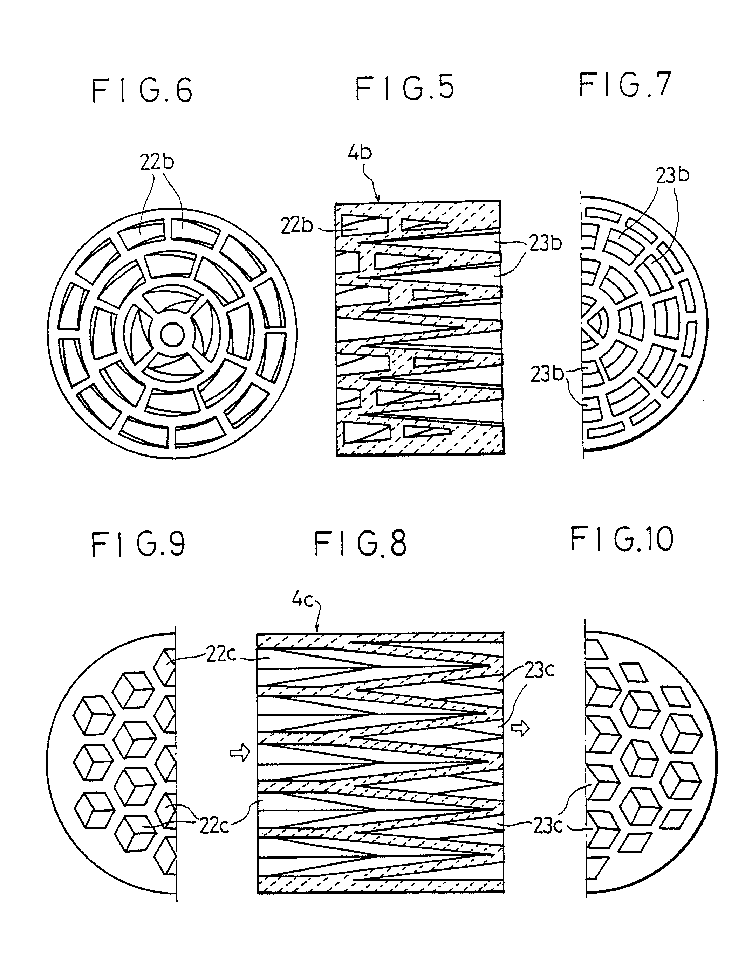

Figs.5 to 7 illustrate a third embodiment of the present invention, in which a filter member 4b has concentrically disposed inlet and outlet holes 22b and 23b. The outlet holes 23b are open perpendicularly to the outlet-side end face, while the inlet holes 22b are formed so as to gradually decrease in sectional area while spiralling on the same circumference. This construction enhances the impingement effect of fine particles.

The filter member 4b is produced in almost the same way as in the first embodiment. The base material of organic compound is molded in a mold having a spirally extending pin around the axis of the filter member 4b, and the mold can be easily removed by rotating it around the axis of the filter member.

Fourth Embodiment

Figs.8 to 10 illustrate a fourth embodiment of the present invention, in which a filter member 4c has inlet and outlet holes 22c and 23c which are in the form of a regular hexagon in section at the respective open ends but are transformed into a regular triangle from an intermediate point.

The manufacturing method is just the same as in the first embodiment except that the shape of pins of the mold is different.

Fifth Embodiment

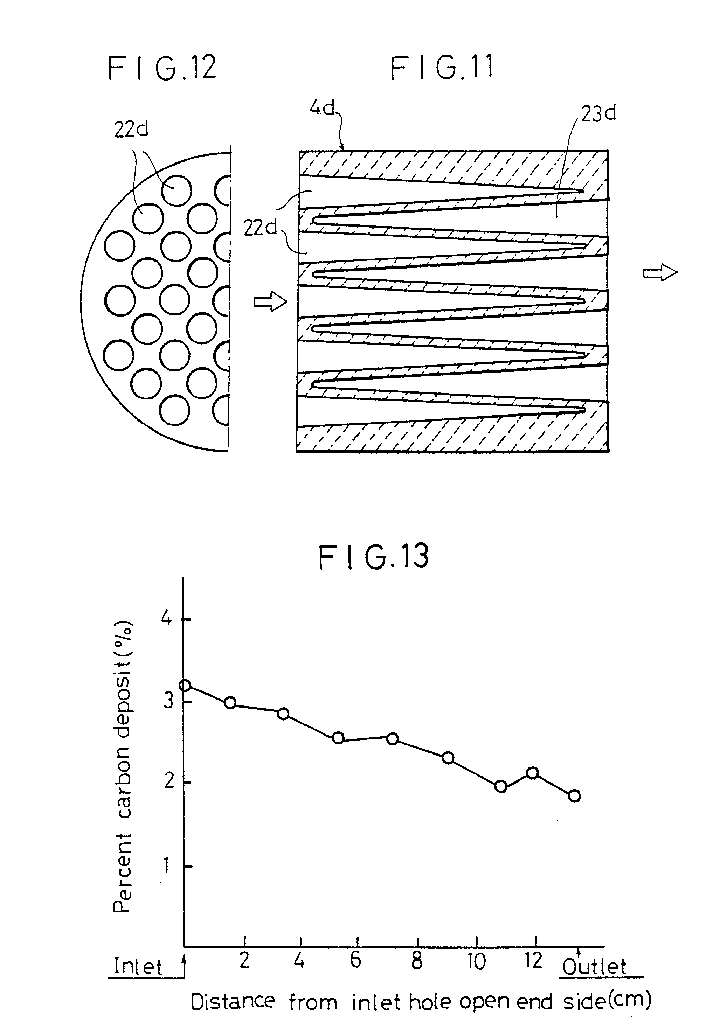

Figs.11 and 12 illustrate a fifth embodiment of the present invention, in which a filter member 4d has conical inlet holes 22d and conical outlet holes 23d. The manufacturing method for the filter member 4c is the same as in the first embodiment except that the pins are made conical.

The distribution of carbon deposit in the fifth embodiment was checked at various distances from the inlet side to the outlet side. Such results as shown in Fig.13 were obtained, from which it is seen that the collection of carbon is uniform inlet to outlet.

Further, with respect to the filter members No.1 to No.5 obtained in the above embodiments, a check was made on a 3 hours' average collection efficiency ($\eta$) and the carbon deposit quantity (mg). Results are as shown in table below. The "conventional product" referred to in the same table indicates a straight type filter in which inlet and outlet holes are not inclined relative to the axis of the filter member and there is no change in sectional area. The collection efficiency means a value of $\{(M-N)/M\} \times 100$ wherein M represents the quantity of fine particles sampled before entering the filter member, and N represents the quantity of fine particles sampled after passing the filter member. And the "3 hr average collection efficiency" indicates an average value of the collection efficiency values measured at every 20 minutes for a period of 3 hours.

TABLE

|  | 3 hr Average Collection Efficiency $\eta$ (%) | Carbon Deposit (mg) |
|---|---|---|
| Ex.1 (1st embodiment) | 48 | 5.0 |
| Ex.2 (2nd embodiment) | 45 | 4.6 |
| Ex.3 (3rd embodiment) | 57 | 6.0 |
| Ex.4 (4th embodiment) | 55 | 5.8 |
| Ex.5 (5th embodiment) | 45 | 4.5 |
| Conventional Product | 40 | 4.1 |

Sixth Embodiment

Figs. 15 and 16 illustrate a sixth embodiment of another invention, in which a filter member 4f has inlet and outlet holes 22f and 23f which are square in section, and partition walls 24f increase in section area gradually from inlet-side end portions 241f toward outlet-side end portions 242f.

The filter member 4f of the above construction functions as follows.

The exhaust gas which has been conducted to the inlet port 3a in Fig.24 flows into the inlet holes 22f of the filter member 4f shown in Figs.15 and 16, then passes through the pores of the partition walls 24f and further through the outlet holes 23f, then is charged to the outlet port 3b in Fig.24.

When the exhaust gas passes through the partition walls 24f, fine particles of carbon contained in the exhaust gas impinge upon pores 244 shown in Fig.17 and are deposited, so that the fine carbon particles are removed from the exhaust gas, and the exhaust gas not containing those particles is fed to the exhaust gas outlet port 3b.

In this case, the partition walls 24f of the filter member 4f are gradually increased in sectional area from the upstream side toward the downstream side, so on the upstream side the passages formed by the pores 244 in ceramic framework 243 shown in Fig.17 become shorter. As a result, the exhaust gas flowing resistance becomes smaller and hence the quantity of gas passing through the passages increases, so that the quantity of gas impinging upon the pores increases and hence the quantity of fine carbon particles adhered to the frame work 243 increases.

On the other hand, on the downstream side of the partition walls 24f, the passages formed by the pores 244 in the framework 243 become longer because of a larger sectional area. As a result, the flowing path resistance becomes larger and the quantity of gas passing through the passages is thereby decreased, so that the quantity of fine carbon particles deposited on the framework 243 decreases.

Consequently, as the entire filter, as shown in Fig.18, the quantity of fine carbon particles deposited is made uniform.

According to the filter member 4f, therefore, in comparison with a conventional filter of the same capacity, the quantity of fine carbon particles collected per unit time is larger because all of the pores 244 can be utilized effectively as particulate carbon deposit surfaces.

In the conventional filter, moreover, there is recognized a phenomenon in which in the vicinity of the downstream end the pores 244 in the framework 243 are clogged with fine carbon particles in a short time and so it becomes less smooth for the exhaust gas to pass therethrough, thereby increasing pressure loss. On the other hand, in the filter member of the above embodiment, there does not occur a local clogging in a short time because the quantity of particulate carbon deposit is uniform throughout the entirety, whereby the effective space for the flow of exhaust gas is ensured over a long period and therefore the increase of pressure loss is diminished.

Since the fine carbon particles collected are burnt off by the electric heater 5 shown in Fig.24, the filter member 4f is regenerated. This regeneration can be effected satisfactory when 2.5 to 3.0 grams of fine carbon particles are deposited per 100 grams of ceramic matrix. If the quantity of the particulate carbon deposit exceeds this range, the quantity of heat generated by the combustion of carbon becomes too much, thus causing fusion of the filter itself. Conversely, at a particulate carbon deposit quantity less than 2.5 g., the conduction quantity of the combustion heat between carbon particles is so small that the particles only in the vicinity of the heater 5 are burnt, and therefore the entire regeneration tends to become impossible.

In the conventional filter, there has often been observed a phenomenon in which a large quantity of fine carbon particles are locally deposited on a downstream end portion, causing fusion of the downstream end portion. On the other hand, in the filter of the above embodiment, such inconvenience is avoided because the quantity of the particulate carbon deposit is made uniform.

A manufacturing method for the filter member 4f is just the same as in the first embodiment except that the shape of pins of mold is different. The shape of pins in the mold vessel portion is in the form of a taper which is reduced in sectional area gradually toward the front end portion. And the shape of pins in the mold cover portion is straight.

Moreover, according to another porous ceramic structure 4e of this embodiment as shown in Fig.14, the sectional area of a partition wall 24e in a filter member 4e may be increased gradually from an inlet-side end portion 241e toward an outlet-side end portion 242e, and the sectional area of inlet holes 22e and outlet holes 23e may be uniform.

The ceramic filter of this invention is not restricted to the structure shown in Figs.15 and 16. For example, the sectional shape of the holes 22 and 23 is not restricted to a square. It may be selected suitably; for example, it may be circular, rectangular, star or rhombic.

Moreover, although the inlet holes 22f are of a shape which is reduced in sectional area toward the downstream side, the outlet holes 23f may be reduced or increased in sectional area toward the downstream side.

The porous ceramic structure can be used as the holder of the catalyst by coating activated aluminum and adhering the catalyst on the porous ceramic structure. Namely, the predetermined amount of aqueous solution including alumina zol, silica zol and aluminum oxide ($r$-$Al_2O_3$) is coated on the porous ceramic structure, and then heat it one hour under 800°C. After that one gram of the catalyst such as Pt is adhereed on the ceramic structure.

The catalyst provided by the above described method is then mounted in the exhaust gas pipe of the 2,000cc gasoline engine. The conversion efficiency of the catalyst is tested under the certain condition such as 2,800rpm, -300mmHg, 110,000hr$^{-1}$ space velocity and 400°C(the temperature of the exhaust gas entering the catalyst).

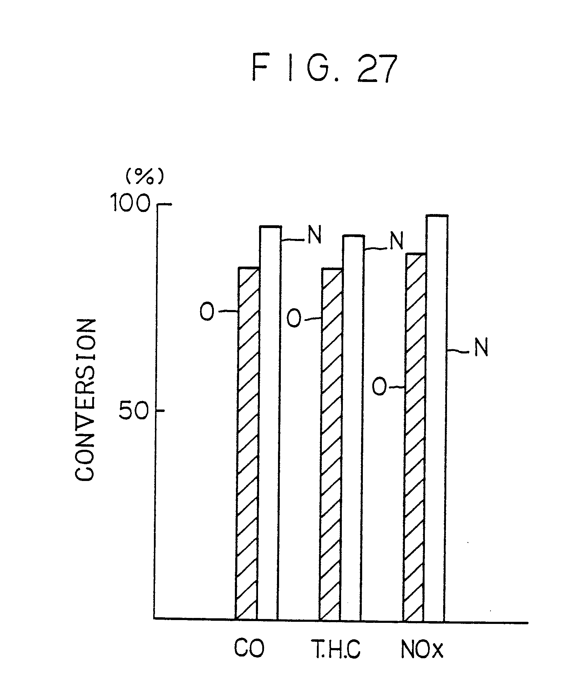

Fig.27 shows the result of the test, the letter "N" represents the catalyst held by the ceramic structure the shape of which is the same as that of described in Fig.15, another letter "O" represents the catalyst held by the ceramic structure the shape of which is the same as that of described in Fig.25. As shown in Fig.27, the catalyst N held by ceramic structure of the present invention can converse CO, HC and NOx more effectively, because the ceramic structure of the present invention can pass the exhaust gas therethrough more effectively.

## Claims

1. A porous ceramic structure formes with inlet holes and outlet holes such that the pores in partition walls afford fluid communication between adjacent inlet and outlet holes along the length thereof wherein the cross-sectional area of the inlet holes and/or the outlet holes and/or the thickness of the partition walls increases in the downstream direction of fluid flow from inlet to outlet.

2. A porous ceramic structure having a group of axially formed inlet holes and a group of axially formed outlet holes adjacent to the group of inlet holes through partition walls, the inlet holes having open front ends and closed rear ends, the outlet holes having closed front ends and open rear ends,
the inlet holes being each reduced in sectional area gradually toward the closed end thereof, and the outlet holes being each increased in sectional area gradually toward the open end thereof.

3. A porous ceramic structure according to claim 1 or claim 2, wherein the partition walls between the inlet and outlet holes have uniform thickness.

4. A porous ceramic structure according to any one of claims 1 to 3, wherein the inlet and outlet holes have a circular or square cross-sectional shape.

5. A porous ceramic structure according to any one of claims 1 to 4, wherein the inlet and outlet holes have each a hexagonal section at the open end thereof and become triangular in section from an axially intermediate point.

6. A porous ceramic structure according to any one of claims 1 to 5, wherein the inlet and outlet holes extend axially and bend circumferentially spirally.

7. A porous ceramic structure having a group of axially formed inlet holes and a group of axially formed outlet holes adjacent to said group of inlet holes through partition walls, said inlet holes having open front ends and closed rear ends, said outlet holes having closed front ends and open rear ends,

said partition walls being gradually increased in sectional area from inlet-side end portions toward outlet-side end portions thereof.

8. A porous ceramic structure according to claim 7, wherein each inlet hole reduces in cross-sectional area gradually toward the closed end thereof, and each outlet hole increases in cross-sectional area gradually toward the open end thereof.

FIG.1

FIG.2

FIG.3

FIG.4

FIG.6   FIG.5   FIG.7

FIG.9   FIG.8   FIG.10

# FIG.12

22d

# FIG.11

4d

22d

23d

# FIG.13

Percent carbon deposit(%)

Inlet — 2 4 6 8 10 12 — Outlet

Distance from inlet hole open end side(cm)

FIG.14

FIG.15

FIG.16

FIG.17

FIG.18

FIG.19

FIG.20

FIG.21

FIG.22

FIG.23

## FIG.24
## (Prior Art)

# F I G.25
## (Prior Art)

# F I G.26

Percent deposit of conventional filter memben (%)

Distance from inlet hole open end side (cm)

# F I G. 27

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | US-A-4 264 346 (G.S. MANN) <br> * claim 3; figure 3 * | 1,3 | B 01 J 35/04 |
| A | GB-A-2 058 601 (DEGUSSA AG) <br> * claims 1, 8; figures 1, 2a * | 1,3 | |
| A | BE-A- 665 664 (THE AIR PREHEATER CO.) <br> * claim 1; figure 2 * | 1,3 | |
| A | DE-B-2 210 438 (SIEMENS AG) <br> * claims 1, 10; figures 1-4 * | 1,4 | |
| A | PATENT ABSTRACTS OF JAPAN, vol. 5, no. 148 (C-72)[820], 18th September 1981; & JP - A - 56 81135 (NIPPON JIDOSHA BUHIN SOGO KENKYUSHO K.K.) 02-07-1981 ----- | 1,6 | TECHNICAL FIELDS SEARCHED (Int. Cl.4) <br><br> B 01 D 53/00 <br> B 01 J 35/00 <br> F 01 N 3/00 |

The present search report has been drawn up for all claims

| Place of search | Date of completion of the search | Examiner |
|---|---|---|
| BERLIN | 20-12-1986 | BERTRAM H E H |